# EUROPEAN PATENT APPLICATION

(11) **EP 4 653 103 A1**
(43) Date of publication of application: **26.11.2025**
(21) Application number: 24815919.6
(22) Date of filing: 31.05.2024
(51) Int. Cl.: B21B 37/74, B21B 38/00, B30B 15/34

(54) **ELECTRODE ROLLING SYSTEM**

(30) Priority: 01.06.2023 KR 20230071085; 30.05.2024 KR 20240071095
(71) Applicant: LG Energy Solution, Ltd., Seoul 07335 (KR)
(72) Inventor: JANG, Ji-Woong, Daejeon 34122 (KR); PARK, Seung-Seo, Daejeon 34122 (KR); KIM, Min-Ju, Daejeon 34122 (KR); AHN, Byoung-Hoon, Daejeon 34122 (KR); HWANG, Yu-Jin, Daejeon 34122 (KR)
(74) Representative: Goddar, Heinz J.
(86) International application number: PCT/KR2024/007498
(87) International publication number: WO 2024/248545

(57) **Abstract**

Disclosed is an electrode rolling system, which includes a rolling device configured to roll an electrode; a temperature adjustment device configured to heat or cool the rolling device; a temperature sensor configured to measure a temperature of the rolling device; and a control device configured to control the temperature adjustment device according to the temperature of the rolling device measured by the temperature sensor.

## Description

### TECHNICAL FIELD

The present disclosure relates to an electrode rolling system.

The present application claims priority to Korean Patent Application No. 10-2023-0071085 filed on June 1, 2023 in the Republic of Korea, the disclosures of which are incorporated herein by reference.

The present application claims priority to Korean Patent Application No. 10-2024-0071095 filed on May 30, 2024 in the Republic of Korea, the disclosures of which are incorporated herein by reference.

### BACKGROUND ART

A rolling roll may be used during hot rolling of an electrode. During hot rolling of an electrode using a rolling roll, if the surface temperature of the rolling roll decreases due to heat loss, the electrode may not be pressed efficiently.

In particular, if temperature loss occurs in the rolling roll, there is no guarantee that the temperature loss will occur uniformly across the entire surface of the rolling roll. In this case, it is difficult to transmit pressure evenly across the entire width of the electrode. The uneven pressure applied to each part of the electrode that occurs during rolling may intensify the occurrence of electrode swell.

In addition, the temperature loss of the roll used for rolling may cause shrinkage of the roll, and this shrinkage of the roll may result in the electrode thickness after rolling appearing larger than the standard value.

Therefore, controlling the surface temperature of the rolling roll used in electrode rolling may be regarded as being essential to ensure process efficiency. However, if the temperature of the rolling roll is maintained at a seriously high level to maintain the surface temperature of the rolling roll sufficiently high, wrinkles may occur in the uncoated portion of the electrode due to the seriously high rolling temperature during the electrode rolling process.

Therefore, there is a need to prepare a method to ensure that the surface temperature of the rolling roll used for electrode rolling may be properly controlled and to prevent problems from occurring due to temperature loss of the rolling roll.

### DISCLOSURE

### Technical Problem

The present disclosure is designed to solve the problems of the related art, and therefore the present disclosure is directed to enabling appropriate control of a temperature of a rolling roll used for rolling an electrode.

The present disclosure is also directed to minimizing temperature loss of a rolling roll surface due to high-speed running of the electrode during hot rolling.

However, the technical object to be solved by the present disclosure is not limited to the above, and other objects not mentioned herein will be clearly understood by those skilled in the art from the following disclosure.

### Technical Solution

In one aspect of the present disclosure, there is provided an electrode rolling system, comprising: a rolling device configured to roll an electrode; a temperature adjustment device configured to heat or cool the rolling device; a temperature sensor configured to measure a temperature of the rolling device; and a control device configured to control the temperature adjustment device according to the temperature of the rolling device measured by the temperature sensor.

The rolling device may include a pair of rolling rolls.

The temperature adjustment device may be configured to regulate the temperature of the rolling device by circulating a fluid and may be configured to adjust a temperature of the circulating fluid according to information about the measured temperature of the rolling device.

The fluid may be oil.

The temperature adjustment device may include a heating wire built in the rolling device.

The temperature adjustment device may include a heating unit configured to raise the temperature of the rolling device; and a cooling unit configured to lower the temperature of the rolling device.

The temperature sensor may be configured to measure a surface temperature of the rolling device.

The control device may control the temperature adjustment device to cool the rolling device when the temperature of the rolling device measured by the temperature sensor exceeds a reference value and heat the rolling device when the temperature of the rolling device measured by the temperature sensor is lower than the reference value.

The electrode rolling system may include a preheating device configured to preheat the electrode before the electrode is rolled by the rolling device.

The preheating device may be configured to preheat the electrode by a NIR heating method.

The rolling device may be a secondary rolling device configured to perform secondary rolling after primary rolling performed by a primary rolling device to the electrode is completed.

The electrode rolling system may include a preheating device configured to preheat the electrode before the electrode is rolled by the rolling device, and the preheating device may be configured to preheat the electrode after rolling by the primary rolling device is completed and before rolling is performed by the secondary rolling device.

### Advantageous Effects

According to one aspect of the present disclosure, the temperature of the rolling roll used for rolling the electrode may be appropriately controlled.

According to another aspect of the present disclosure, during hot rolling, the temperature loss of the rolling roll surface due to the high-speed running of the electrode may be minimized.

However, the beneficial effects that can be derived through the present disclosure are not limited to the effects described above, and other advantageous effects not mentioned above will be clearly understood by those skilled in the art from the following disclosure.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram showing an electrode rolling system according to an embodiment of the present disclosure.
FIG. 2 is a diagram showing a temperature adjustment device for controlling the temperature of a rolling device of the present disclosure.
FIG. 3 is a diagram showing that the density of a flow path is formed differently depending on the location within the rolling device of the present disclosure.
FIG. 4 is a drawing showing the structure in which a heating wire is installed within the rolling device of the present disclosure.
FIG. 5 is a diagram showing an embodiment in which the temperature adjustment device of the present disclosure includes a heating unit and a cooling unit.
FIG. 6 is a diagram showing an embodiment in which a temperature sensor of the present disclosure is configured to measure the temperature of the rolling device in a non-contact manner.
FIG. 7 is a diagram showing an electrode rolling system including a preheating device.
FIG. 8 is a diagram showing an electrode rolling system including a primary rolling device and a secondary rolling device.
FIG. 9 is a diagram showing an electrode rolling system configured to perform preheating after primary rolling and before secondary rolling.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

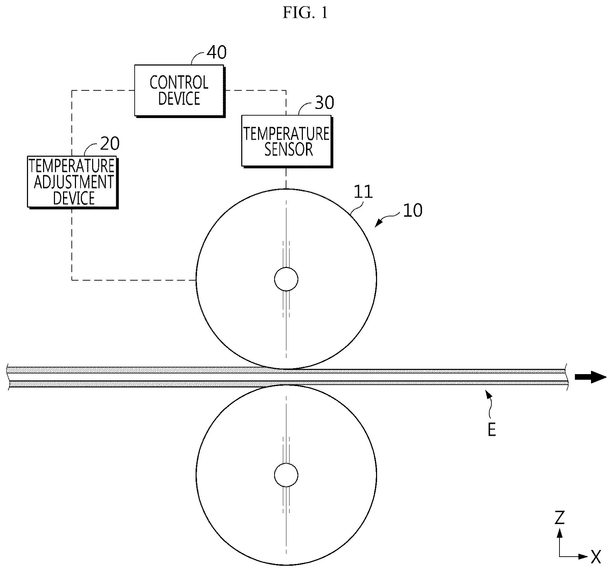

First, referring to FIG. 1, an electrode rolling system of the present disclosure will be described. FIG. 1 is a diagram showing an electrode rolling system according to an embodiment of the present disclosure.

Referring to FIG. 1, the electrode rolling system according to an embodiment of the present disclosure may include a rolling device 10, a temperature adjustment device 20, a temperature sensor 30, and a control device 40.

The rolling device 10 may be configured to roll an electrode E. The rolling device 10 may include, for example, a pair of rolling rolls 11. The temperature adjustment device 20 may be configured to heat or cool the rolling device 10. The temperature sensor 30 may be configured to measure the temperature of the rolling device 10. The control device 40 may be configured to control the temperature adjustment device 20 according to the temperature of the rolling device 10 measured by the temperature sensor 30.

The electrode rolling system of the present disclosure may be configured to measure the temperature of the rolling device 10 in the process of rolling the electrode E and control the heating and/or cooling operation of the temperature adjustment device 20 with reference to the measured temperature. Accordingly, the electrode rolling system of the present disclosure may control the temperature of the rolling device 10 in the process of rolling the electrode E so that the temperature of the rolling device 10 does not exceed an appropriate temperature range required for rolling the electrode E.

When performing hot rolling, if the temperature of the rolling roll 11 falls below a reference temperature, the linear pressure applied to the electrode E may increase, and as a result, the swell generated on the electrode E may become severe. In addition, if the rolling temperature is insufficient, the rolling roll 11 may shrink, and as a result, the thickness of the electrode E after rolling may increase than a target thickness. Conversely, when performing hot rolling, if the rolling temperature exceeds the reference temperature, the electrode E may be damaged due to heat. If the rolling temperature is too high, for example, wrinkles may occur in the uncoated portion of the electrode E, which may make the rolling process impossible.

The electrode rolling system of the present disclosure may be configured to automatically control the rolling temperature in consideration of these problems, and accordingly, it is possible to prevent the rolling temperature of the electrode E from being seriously lowered not to perform efficient rolling or prevent the rolling temperature of the electrode E from being so seriously raised to damage the electrode E.

Meanwhile, the electrode E rolled by the electrode rolling system of the present disclosure may be an electrode for a secondary battery. The electrode E may include an electrode current collector and an electrode active material layer coated on one or both sides of the electrode current collector. The electrode E may be transported in one direction. The electrode E may be transported along the direction of the arrow shown in FIG. 1. The electrode E may be rolled while passing between the pair of rolling rolls 11, reducing its thickness.

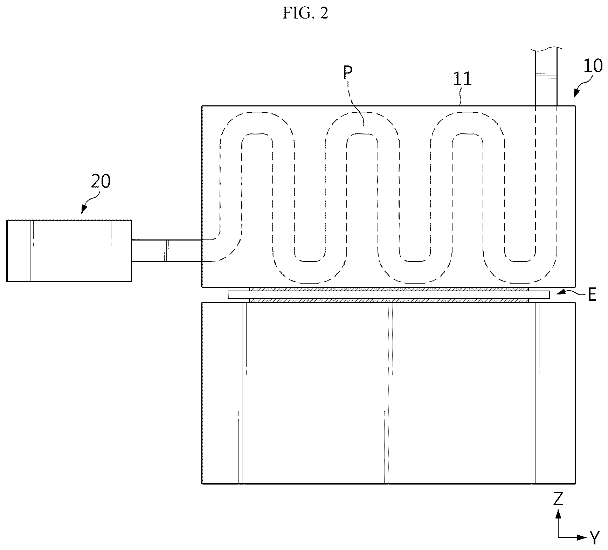

Next, the temperature adjustment device 20 of the present disclosure will be described with reference to FIG. 2 along with FIG. 1. FIG. 2 is a diagram showing a temperature adjustment device for controlling the temperature of a rolling device of the present disclosure.

Referring to FIGS. 1 and 2, the temperature adjustment device 20 of the present disclosure may be configured to adjust the temperature of the rolling device 10 by circulating a fluid. The temperature adjustment device 20 may be configured to adjust the temperature of the circulating fluid according to information about the temperature of the rolling device 10 measured by the temperature sensor 30.

As such, the electrode rolling system of the present disclosure may include the temperature adjustment device 20 configured to adjust the temperature of the rolling device 10, thereby improving the quality of rolling by maintaining the rolling temperature appropriately.

The temperature adjustment device 20 may include a flow path P for circulation of the fluid. The flow path P may be configured to pass through the interior of the rolling roll 11. The fluid passing through the flow path P may be, for example, oil. However, the present disclosure is not limited thereto, and water, gas, or the like may be used as the fluid to control temperature. The flow path P may contact the inner surface of the rolling roll 11. Accordingly, depending on the temperature of the fluid flowing through the flow path P, the outer circumference of the rolling roll 11 may be heated or cooled by heat conduction. The temperature adjustment device 20 may include a chamber for supplying the fluid to the flow path P. The fluid heated or cooled within the chamber or in a separate device may pass through the inside of the rolling roll 11 through the flow path P and then flow back into the chamber.

The temperature adjustment device 20 may include a fluid heating device configured to heat the fluid for temperature adjustment. The temperature adjustment device 20 may include a valve configured to allow or block circulation of the fluid through a part or all of the flow path P. The operation of the temperature adjustment device 20 may be controlled by the control device 40, thereby maintaining the temperature of the rolling device 10 within a range suitable for rolling.

In the drawings of this application, a structure in which only the rolling roll 11 disposed on one side of the electrode E is connected to the temperature adjustment device 20 is shown. However, this is for convenience in illustration, and the temperature adjustment device 20 may be connected to both the pair of rolling rolls 11.

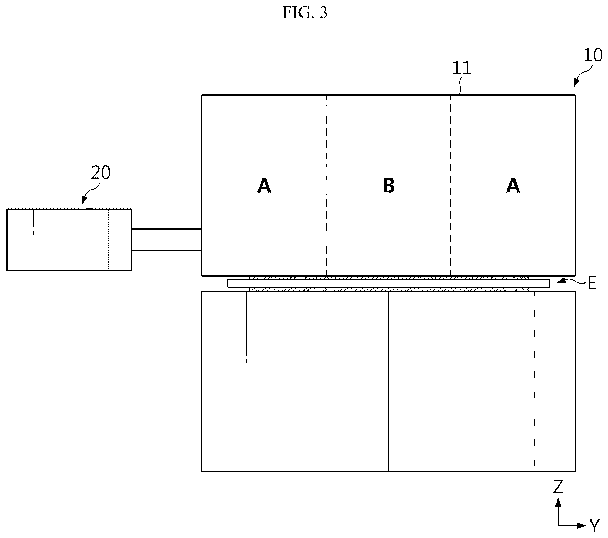

Next, with reference to FIG. 3 along with FIGS. 1 and 2, the structure in which the flow path P is formed at different densities for each location inside the rolling roll 11 will be described. FIG. 3 is a diagram showing that the density of a flow path is formed differently depending on the location within the rolling device of the present disclosure.

Referring to FIGS. 1 to 3, in the flow path P, the arrangement density in a region (A region) adjacent to both ends in the rotation axis direction of the rolling roll 11 (direction parallel to the Y axis) may be higher than the arrangement density in a region (B region) adjacent to the center.

In this case, when performing hot rolling, more heat may be transferred to the edge (A region) of the rolling roll 11, where the heat loss rate may be relatively high. By transferring a larger amount of heat to the region (A region) with relatively high heat loss, the temperature deviation of the entire surface region of the rolling roll 11 in contact with the electrode E may be reduced. This may give the effect of forming a constant thickness in the entire surface region of the electrode E along the rotation axis direction of the rolling roll 11.

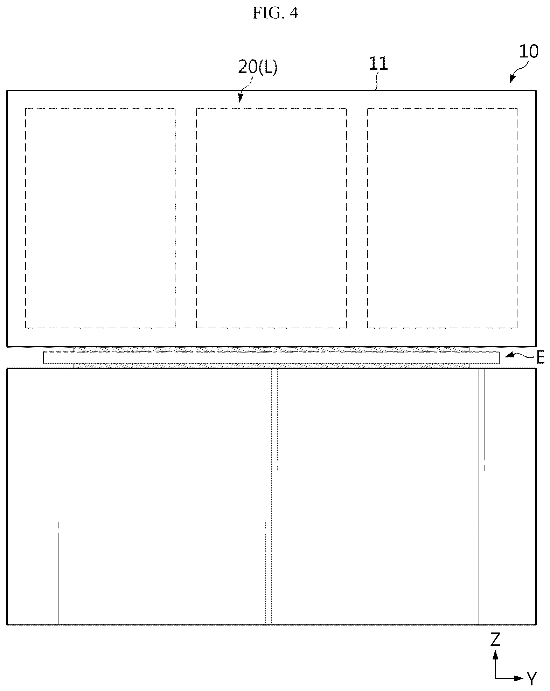

Next, referring to FIG. 4 along with FIGS. 1 and 3, an embodiment in which a heating wire L is disposed within the temperature adjustment device 20 of the present disclosure will be described. FIG. 4 is a drawing showing the structure in which a heating wire is installed within the rolling device of the present disclosure.

Referring to FIGS. 1, 3, and 4, the temperature adjustment device 20 may include a heating wire L built in the rolling device 10. In this case, the amount of current flowing through the heating wire L may be controlled by the control device 40, thereby ensuring that the temperature of the rolling device 10 is maintained within a range suitable for rolling.

Meanwhile, although not shown in the drawing, similar to those described above with reference to FIG. 3, the arrangement density of the heating wire L in the region (A region) adjacent to both ends in the rotation axis direction of the rolling roll 11 may be higher than the arrangement density in the region (B region) adjacent to the center.

In this case, when performing hot rolling, more heat may be transferred to the edge (A region) of the rolling roll 11, where the heat loss rate may be relatively high. By transferring a larger amount of heat to the region (A region) with relatively high heat loss, the temperature deviation of the entire surface region of the rolling roll 11 in contact with the electrode E may be reduced. This may give the effect of forming a constant thickness in the entire surface region of the electrode E along the rotation axis direction of the rolling roll 11.

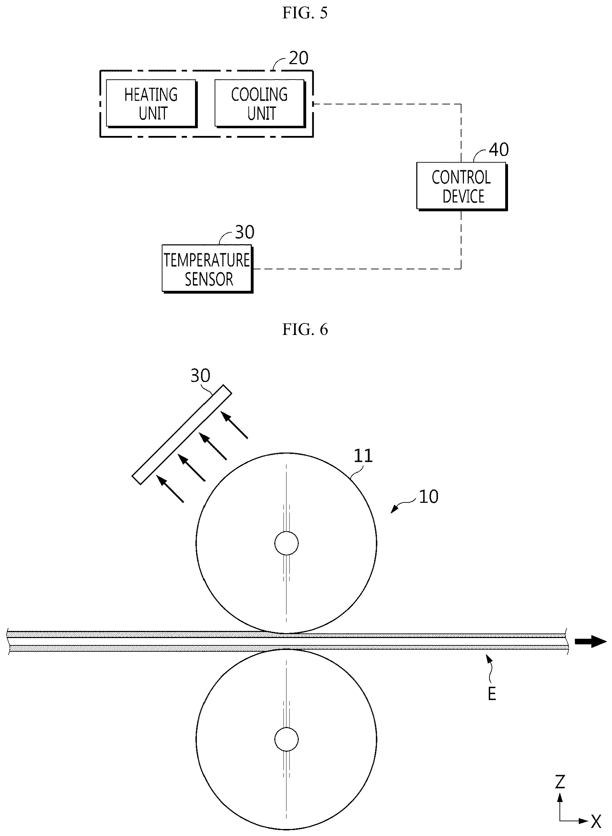

Next, referring to FIG. 5 along with FIG. 1, an embodiment of the temperature adjustment device 20 of the present disclosure will be described. FIG. 5 is a diagram showing an embodiment in which the temperature adjustment device of the present disclosure includes a heating unit and a cooling unit.

Referring to FIGS. 1 and 5, the temperature adjustment device 20 may include a heating unit and a cooling unit. The heating unit may be configured to raise the temperature of the rolling device 10. The cooling unit may be configured to lower the temperature of the rolling device 10.

In this way, if the temperature adjustment device 20 is configured to include both a heating unit and a cooling unit, when the surface temperature of the rolling roll 11 does not reach an appropriate temperature for rolling of the electrode E or exceeds the appropriate temperature, rolling may be performed efficiently through rapid temperature adjustment. If the temperature adjustment device 20 includes only the heating unit to increase the temperature of the rolling roll 11, when heat loss occurs in the rolling roll 11 so that the rolling temperature falls below the reference temperature, this situation may be handled quickly through the operation of the heating unit. However, if the rolling temperature exceeds the reference temperature, it is difficult to control the temperature rapidly. In other words, even if the operation of the heating unit is stopped to lower the temperature of the rolling roll 11, it may be difficult to quickly control the temperature because it takes significant time for the temperature of the rolling roll 11 to be naturally lowered.

The heating unit may be configured, for example, to heat the fluid so that the temperature of the fluid is higher than the temperature of the rolling roll 11 and to heat the rolling roll 11 using the heated fluid. Alternatively, the heating unit may be configured to heat the rolling roll 11 using, for example, a heating wire. However, the present disclosure is not limited thereto, and various types of heating units configured to increase the temperature of the rolling roll 11 may be applied.

The cooling unit may be configured, for example, to cool the fluid so that the temperature of the fluid is lower than the temperature of the rolling roll 11 and to cool the rolling roll 11 using the cooled fluid. However, the present disclosure is not limited thereto, and various types of cooling units configured to lower the temperature of the rolling roll 11 may be applied.

Next, referring to FIG. 6 along with FIG. 1, an exemplary form of the temperature sensor 30 of the present disclosure will be described. FIG. 6 is a diagram showing an embodiment in which a temperature sensor of the present disclosure is configured to measure the temperature of the rolling device in a non-contact manner.

Referring to FIGS. 1 and 6, the temperature sensor 30 may be configured to measure the surface temperature of the rolling roll 11. The temperature sensor 30 may be configured to measure the temperature of the outer circumference of the rolling roll 11 in contact with the electrode E.

For efficient rolling, the surface temperature of the rolling roll 11, which is in direct contact with the electrode E during rolling, needs to be maintained within an appropriate range. In terms of productivity, the transfer speed of the electrode E within the system for manufacturing the electrode E needs to be maintained to a certain level or above. However, when performing hot rolling, as the transfer speed of the electrode E increases, heat loss on the surface of the rolling roll 11 may occur faster. Therefore, the quality of rolling may be improved by directly measuring the surface temperature of the rolling roll 11 and quickly compensating for heat loss on the surface of the rolling roll 11 with reference to the surface temperature.

The temperature sensor 30 may be configured to measure the surface temperature of the rolling roll 11 in a non-contact manner, for example. The temperature sensor 30 may be configured to provide information about the measured surface temperature of the rolling roll 11 to the control device 40.

Meanwhile, the drawing in this application shows only the case where the temperature sensor 30 is provided at a position corresponding to one of the pair of rolling rolls 11, but the present disclosure is not limited thereto. In other words, the temperature sensor 30 of the present disclosure may be configured to measure the temperature of both the pairs of rolling rolls 11. For example, at least one pair of temperature sensors 30 may be provided, and each of the pair of temperature sensors 30 may be configured to measure the temperature of each of the pair of rolling rolls 11.

Next, referring to FIG. 1, the control device 40 of the present disclosure will be described in more detail.

Referring to FIG. 1, the control device 40 may control the temperature adjustment device to cool the rolling device 10 when the temperature of the rolling device 10 measured by temperature sensor 30 exceeds the reference value and to heat the rolling device when the temperature of the rolling device 10 measured by the temperature sensor 30 is lower than the reference value.

In this way, the electrode rolling system of the present disclosure may ensure that an appropriate rolling temperature is continuously maintained by including the control device 40 that controls the temperature of the rolling roll 11 by the temperature adjustment device 20 according to the temperature of the rolling device 10 measured by the temperature sensor 30.

Cooling of the rolling device 10 may mean active cooling, such as circulation of a fluid with a temperature lower than the measured temperature, in a case where the temperature of the rolling roll 11 is measured higher than the appropriate reference temperature range for rolling. In contrast, cooling of the rolling device 10 may mean passive cooling that causes the temperature of the rolling roll 11 to be lowered by not heating the rolling roll 11. Heating of the rolling device 10 may mean heating using circulation of a fluid and/or heating using a heating wire, as described above.

The control device 40 of the present disclosure does not necessarily refer to a component that is physically separate from the temperature adjustment device 20. That is, the temperature adjustment device 20 and the control device 40 of the present disclosure may be provided as one integrated device.

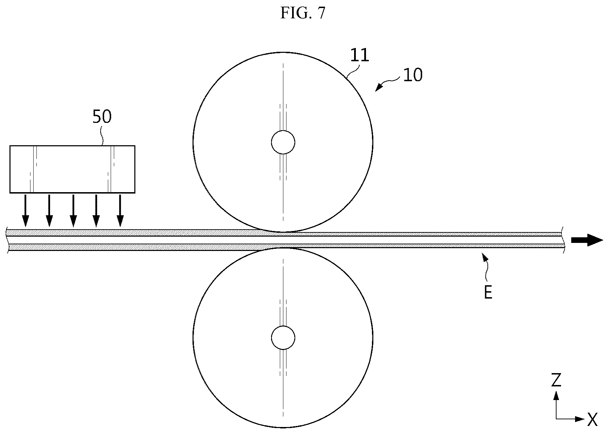

Next, with reference to FIG. 7 along with FIG. 1, a preheating device 50 of the present disclosure will be described. FIG. 7 is a diagram showing an electrode rolling system including a preheating device.

Referring to FIGS. 1 and 7, the electrode rolling system of the present disclosure may include a preheating device 50. The preheating device 50 may be configured to preheat the electrode E before the electrode E is rolled by the rolling device 10.

When the electrode E is rolled after being preheated using the preheating device 50, the surface temperature of the rolling roll 11 may be prevented from rapidly losing as rolling progresses. Since the electrode E is preheated, the temperature of the electrode E may increase, thereby minimizing the temperature difference between the surface of the rolling roll 11 and the electrode E. As a result, heat loss occurring on the surface of the rolling roll 11 when the electrode E is in contact with the rolling roll 11 may be minimized. In addition, since heat loss on the surface of the rolling roll 11 is minimized during the rolling process, the temperature of the rolling roll 11 may be controlled more easily through the temperature adjustment device 20.

The preheating device 50 may be configured to heat the electrode E by, for example, a NIR (Near IR) heating method. For example, the preheating device 50 may be a NIR oven.

In the drawings of this application, the preheating device 50 is shown as being disposed only on one side of the electrode E, but the present disclosure is not limited thereto. The preheating device 50 may be provided on both sides of the electrode E, respectively.

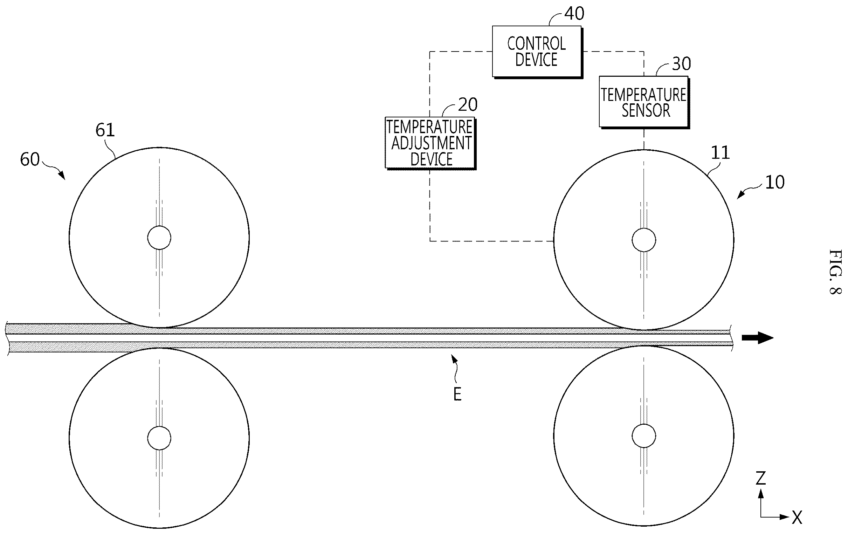

Next, with reference to FIG. 8, the electrode rolling system of the present disclosure configured to perform rolling multiple times will be described. FIG. 8 is a diagram showing an electrode rolling system including a primary rolling device and a secondary rolling device.

Referring to FIG. 8, the electrode rolling system of the present disclosure may include a primary rolling device 60 and a secondary rolling device 10. That is, the rolling device 10 of the present disclosure described with reference to FIG. 1 may be a secondary rolling device 10 configured to perform secondary rolling after primary rolling is completed. Temperature adjustment by the temperature adjustment device 20, the temperature sensor 30, and the control device 40 of the present disclosure may be performed only for the secondary rolling device 10. Of course, both the primary rolling device 60 and the secondary rolling device 10 may be configured to maintain the surface temperature of the rolling roll 61, 11 within a certain range. However, in terms of process efficiency, when it is intended to control the temperature of only one rolling device, it may be more advantageous to control the temperature of the secondary rolling device 20.

The thickness of the electrode E may sequentially decrease as it goes through primary rolling and secondary rolling. In this case, managing process conditions during secondary rolling may be more difficult than managing process conditions during primary rolling. Therefore, it may be desirable to control the surface temperature of the rolling roll 11 of the secondary rolling device 10 to manage process conditions during secondary rolling.

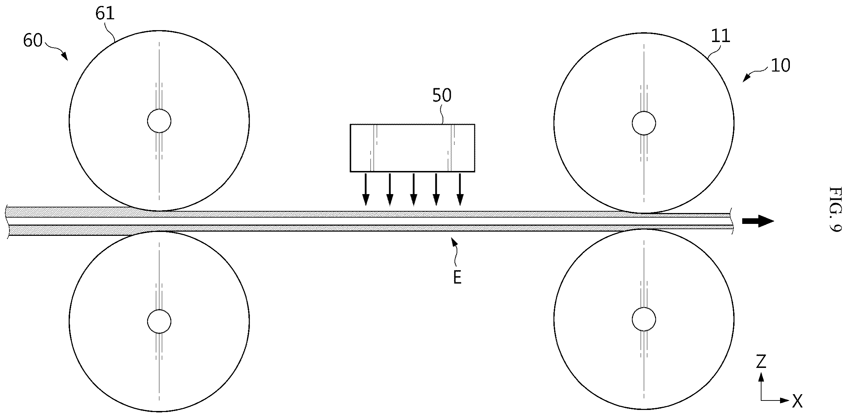

Next, referring to FIG. 9 along with FIG. 8, the point in time at which preheating is performed in the case where the electrode rolling system of the present disclosure is configured to perform primary rolling and secondary rolling will be explained. FIG. 9 is a diagram showing an electrode rolling system configured to perform preheating after primary rolling and before secondary rolling.

Referring to FIG. 9 along with FIG. 8, the preheating device 50 of the present disclosure may be configured to preheat the electrode E after the rolling by the primary rolling device 60 is completed and before rolling is performed by the secondary rolling device 10.

In this case, the quality of rolling may be improved through secondary rolling. Also, in this case, the temperature loss rate of the rolling roll 11 of the secondary rolling device 10 may be lowered, thereby further improving the quality of rolling.

In the drawings of this application, only the electrode rolling system configured to perform preheating after rolling by the primary rolling device 60 and before rolling by the secondary rolling device 10 is shown, but the present disclosure is not limited thereto. In other words, the preheating device 50 of the present disclosure may be disposed to perform preheating both before primary rolling and before secondary rolling. However, if the preheating process is to be applied only once in consideration of the efficiency of the process, it may be advantageous to perform preheating after primary rolling is completed and before secondary rolling is performed. This is because managing the process conditions of secondary rolling may be more difficult than managing the process conditions of primary rolling.

Meanwhile, in FIG. 9 of this application, the temperature adjustment device 20, the temperature sensor 30, and the control device 40 are not depicted, but these components may be applied to control the temperature of the secondary rolling device 10, and may be additionally applied to control the temperature of the primary rolling device 10.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

### Reference Signs

E: electrode
10: rolling device (primary rolling device)
11: rolling roll
20: temperature adjustment device
P: flow path
L: heating wire
30: temperature sensor
40: control device
50: preheating device
60: rolling device (secondary rolling device)
61: rolling roll

## Claims

1. An electrode rolling system, comprising:
a rolling device configured to roll an electrode;
a temperature adjustment device configured to heat or cool the rolling device;
a temperature sensor configured to measure a temperature of the rolling device; and
a control device configured to control the temperature adjustment device according to the temperature of the rolling device measured by the temperature sensor.

2. The electrode rolling system according to claim 1,
wherein the rolling device includes a pair of rolling rolls.

3. The electrode rolling system according to claim 1,
wherein the temperature adjustment device is configured to regulate the temperature of the rolling device by circulating a fluid and is configured to adjust a temperature of the circulating fluid according to information about the measured temperature of the rolling device.

4. The electrode rolling system according to claim 3,
wherein the fluid is oil.

5. The electrode rolling system according to claim 1,
wherein the temperature adjustment device includes a heating wire built in the rolling device.

6. The electrode rolling system according to claim 1,
wherein the temperature adjustment device includes:
a heating unit configured to raise the temperature of the rolling device; and
a cooling unit configured to lower the temperature of the rolling device.

7. The electrode rolling system according to claim 1,
wherein the temperature sensor is configured to measure a surface temperature of the rolling device.

8. The electrode rolling system according to claim 1,
wherein the control device controls the temperature adjustment device to cool the rolling device when the temperature of the rolling device measured by the temperature sensor exceeds a reference value and heat the rolling device when the temperature of the rolling device measured by the temperature sensor is lower than the reference value.

9. The electrode rolling system according to claim 1,
wherein the electrode rolling system includes a preheating device configured to preheat the electrode before the electrode is rolled by the rolling device.

10. The electrode rolling system according to claim 9,
wherein the preheating device is configured to preheat the electrode by a NIR heating method.

11. The electrode rolling system according to claim 1,
wherein the rolling device is a secondary rolling device configured to perform secondary rolling after primary rolling performed by a primary rolling device to the electrode is completed.

12. The electrode rolling system according to claim 11,
wherein the electrode rolling system includes a preheating device configured to preheat the electrode before the electrode is rolled by the rolling device, and
wherein the preheating device is configured to preheat the electrode after rolling by the primary rolling device is completed and before rolling is performed by the secondary rolling device.
